(19) Europäisches Patentamt
European Patent Office
Office européen des brevets

(11) **EP 4 184 396 A1**

(12) **EUROPEAN PATENT APPLICATION**

(43) Date of publication:
**24.05.2023   Bulletin 2023/21**

(21) Application number: **22180841.3**

(22) Date of filing: **23.06.2022**

(51) International Patent Classification (IPC):
**G06N 5/04** *(2023.01)*       **G06N 3/04** *(2023.01)*
**G06N 3/08** *(2023.01)*

(52) Cooperative Patent Classification (CPC):
**G06N 5/045; G06N 3/045; G06N 3/084**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.11.2021   PT 2021117594**

(71) Applicant: **Feedzai - Consultadoria e Inovação Tecnológica, S.A.**
**3030-199 Coimbra (PT)**

(72) Inventors:
• **BENTO SOUSA, JOÃO PEDRO**
  **3030-199 COIMBRA (PT)**
• **BALAYAN, VLADIMIR**
  **3030-199 COIMBRA (PT)**
• **DOS SANTOS SALEIRO, PEDRO**
  **3030-199 COIMBRA (PT)**
• **DE OLIVEIRA MOREIRA, RICARDO MIGUEL**
  **3030-199 COIMBRA (PT)**
• **SANTOS RODRIGUES BIZARRO, PEDRO GUSTAVO**
  **3030-199 COIMBRA (PT)**

(74) Representative: **Patentree**
**Edificio Net**
**Rua de Salazares, 842**
**4149-002 Porto (PT)**

(54) **METHOD AND SYSTEM FOR OBTAINING A SURROGATE HIERARCHICAL MACHINE-LEARNING MODEL TO PROVIDE CONCEPT EXPLANATIONS FOR A MACHINE-LEARNING CLASSIFIER**

(57)   The present document discloses a computer-implemented method for obtaining a surrogate hierarchical machine-learning model, trained to provide concept explanations for a machine-learning model classifier, the method comprising the steps of: obtaining input records and corresponding concept labels for each input record; feeding the obtained input records to the machine-learning model classifier; feeding the obtained input records to the surrogate hierarchical machine-learning model; comparing the determined class estimate from the output records of the surrogate hierarchical machine-learning model with the determined class estimate contained in the output records of the machine-learning model classifier to calculate a distillation loss; backpropagating a calculated gradient of the distillation loss to update weights of the surrogate hierarchical machine-learning model. It is also disclosed a respective computer system and a computer program product embodied in a non-transitory computer-readable medium.

Fig. 2

**Description**

**TECHNICAL FIELD**

The present disclosure relates to a computer-implemented method and system for obtaining a surrogate hierarchical machine-learning model, trained to provide concept explanations for a machine-learning model classifier, for example a black-box model for which no explainability concepts are fully or partially known. This method and system use a model-agnostic approach that provides a surrogate hierarchical neural network that learns to jointly mimic a machine-learning model classifier and predict concept explanations.

**BACKGROUND**

With the adoption of more complex Machine Learning (ML) models, decision systems have become more opaque and less interpretable. In sensitive contexts, such as Financial Crime or Healthcare, humans-in-the-loop would benefit from easy to interpret explanations for the models' predictions, improving trust and efficiency of the decision-making process.

Concept-based explainability is a promising research direction that proposes the use of high-level domain explanations, e.g., patient symptoms for doctors, or fraudulent patterns for fraud analysts, such as "High speed ordering", or "Suspicious Email", instead of feature-attribution, e.g., models' input features, such as "mcc=7801". However, most of the commonly used explainability methods such as LIME [10] or SHAP [14] produce feature-attribution explanations that fail to fulfil human-in-the-loop explanation requirements. These are too technical and, therefore, too difficult to grasp by non-technical personas, e.g., fraud analysts.

Among the vast literature on Deep Learning (DL) interpretability, most methods produce explanations based on low-level features. While useful for ML experts, e.g., data scientists, these explanations remain predominantly unintelligible to most humans-in-the-loop, e.g., fraud analysts, which exhibit a high-level reasoning process. Below, it is described how recent work in concept-based explainability tries to bridge this information gap, producing more user-friendly concept-based explanations.

Earlier works on concept-based explainability, such as Testing with Concept Activation Vectors (TCAV) or Automated Concept-based Explanation (ACE) [6, 5], rely on *post-hoc* learning of concepts and subsequent assessment of their importance for the prediction of a given class. Both methods yield global concept explanations, i.e., the most relevant concepts for the prediction of a given class, instead of local explanations, i.e., the concepts that most contribute to a given instance prediction. Local concept explanations are better suited to help humans-in-the-loop decision-makers. Additionally, both methods are specific to images and neural network-based models.

TCAV creates representations of a given concept from sets of selected images with the presence of that human-understandable concept. Using these sets, TCAV learns to linearly discern the examples with and without the concept on the network's activation space. In this context, network's activation space refers to the output, or activation, of a layer *l* when provided an image as input.

ACE, on the other hand, adopts an unsupervised approach, discarding the need for additional labelled datasets. The method extracts concepts automatically by first generating local image segments over the data of a specific class. Then, ACE clusters these local segments in the network's activation space. Finally, each cluster is assigned an importance weight for the prediction of a given class.

Another branch of concept-based explainability targets in-model interpretability, or self-explainability [3, 7, 8, 11, 12]. The most common approaches propose changes to both the architecture and the learning algorithm so that their model is able to learn both a predictive task and its explanations.

Concurrently, [7] and [3] have proposed sequential self-explainable models to produce predictions and associated explanations. Despite focusing on different use cases - image and tabular, respectively - both methods cast the joint learning of the predictive and the concept-based explainability tasks as a multi-task learning approach. In particular, they propose to adapt standard neural-network models to accommodate a concept layer, whose outputs are the predicted explainability concepts, and an intermediary loss to ground the predictions of this layer to the concept labels. The authors also force a strict hierarchy in the network so that the final classification predictions are linear functions of the predicted explainability concepts.

Other work, [8] presents a 3-layer prototype classifier network, requiring no concept labels. The first layer, named prototype layer, learns a set of prototype units by minimizing their distance to a lower dimensional latent representation of the input. Wherein a prototype unit is a prototype vector learnt by the model. To prevent degeneration of this latent representation, [8] suggest extending training with a "prototype-to-input" decoder and a reconstruction loss. In the same vein, [11] put forward Self-Explainable Neural Network (SENN), a model composed of two independent neural networks whose outputs are not only combined, e.g., linear combination, to form a prediction, but are also provided as explanations. One of the networks, dubbed concept encoder, is responsible for learning the representation of human-interpretable concepts from cues in input, whereas the other network learns to weight relevant concepts based on the input.

More recently, in the natural language domain, SelfExplain [13] enriches text classification predictions with both global and local phrase-based concepts. The authors propose to add interpretability as an auxiliary task to the existing models. Thus, SelfExplain extends traditional models with two layers of different interpretability granularity, as well as appropriate terms to the training loss.

These self-explainable approaches are framed as multi-task learning, consisting of a main classification task and an explainability task. Although promising conceptually, these attain sub-par performance in the main classification task due to known trade-offs in multi-task learning [15].

Another approach for explainability is knowledge distillation. This technique was firstly applied for model compression [4]. The end goal is to approximate the functionality of the complex model by building a much simpler and faster model with similar performance. Data is passed through a complex model to get the scores probabilities that are used for training smaller models. Then, the authors on another work [1] introduce the "matching logits" method that uses the outputs produced by the model before the final activation function, usually used in NN to normalize the scores between 0 and 1, instead of training with probabilities, claiming that this method improves the training of the smaller model.

In the Explainable Artificial Intelligence (XAI) field, knowledge distillation is used to improve the interpretability of the complex ML models by using the black-box models' logits, and then use them for training a decision tree that is considered a transparent model [1]. While the Knowledge distillation technique does not exhibit the limitations associated with the perturbation-based methods, e.g., LIME that perturb the input space by randomly changing some feature values, it still presents a few problems. Firstly, its outputs are feature-based. This means that even though the model is simpler, it is still based on the same non-interpretable features of the more complex model and, therefore, explanations are still difficult to grasp and interpret by non-technical personas. Also, even after distilling the complex model, the resulted simpler one may have a lot of parameters [9] to reach approximately the same performance as the complex model.

Previous work has focused on providing concepts for specific model types, such as Neural Network models by trying to extract concepts from the learned network or through multi-task learning.

These facts are disclosed in order to illustrate the technical problem addressed by the present disclosure.

## GENERAL DESCRIPTION

The present disclosure relates to a computer-implemented method for obtaining a surrogate hierarchical machine-learning model, trained to provide concept explanations for a machine-learning model classifier, for example a black-box model for which no explainability concepts are fully or partially known. This method uses a hierarchical surrogate neural network that learns to jointly mimic the machine-learning model and provides concept explanations. There are also disclosed several surrogate architectures and learning strategies for practical application.

Concept-based explainability aims to fill the gap of model interpretability for humans-in-the loop, i.e., domain experts that may lack deep technical knowledge in Machine Learning (ML).

PCT/US21/48502 filed on 31-AUG-2021 which is hereby incorporated by reference, in particular the disclosed hierarchical surrogate neural network.

The present document discloses a computer-implemented method for obtaining a surrogate hierarchical machine-learning model, trained to provide concept explanations for a machine-learning model classifier, i.e., a machine-learning model for which its internal mechanism is hidden or unknown, e.g., a black-box model, wherein the machine-learning model classifier is a pre-existing machine-learning model arranged to receive and determine a classification estimate of input records into output records, each output record containing a determined class corresponding to a respective input record, input records are data records storing data, each input record representing an instance, output records are data records storing data, each input record representing a class, wherein the surrogate hierarchical machine-learning model is a machine-learning model arranged to receive input records, to determine a classification estimate of input records into output records, each output record containing a determined class corresponding to a respective input record and corresponding concept labels, wherein the surrogate hierarchical machine-learning model is a hierarchical multi-task network which comprises, sequentially connected, a first neural-network layer block for receiving input records, a second neural-network layer block split by concept, a concept classifier for each of the concept labels, and a weighted layer block for providing a determined class estimate corresponding to a respective input record, the method comprising the steps of:

> obtaining input records and corresponding concept labels for each input record;
> feeding the obtained input records to the machine-learning model classifier;
> feeding the obtained input records to the surrogate hierarchical machine-learning model;
> comparing the determined class estimate from the output records of the surrogate hierarchical machine-learning model with the determined class estimate contained in the output records of the machine-learning model classifier to calculate a distillation loss;

backpropagating a calculated gradient of the distillation loss to update weights of the surrogate hierarchical machine-learning model.

In an embodiment, the surrogate hierarchical machine-learning model comprises an attention neural-network layer block feeding the weighted layer block.

In an embodiment, the attention neural-network layer block is fed from the first neural-network layer block, or is fed from the second neural-network layer block, or is fed from the input records, or combinations thereof.

In an embodiment, the attention neural-network layer block is fed from the determined class estimate from the output records of the machine-learning model classifier.

In an embodiment, the first neural-network layer block for receiving input records or the second neural-network layer block is fed from the determined class estimate from the output records of the machine-learning model classifier.

In an embodiment, the backpropagating of the calculated gradient of the distillation loss to update weights of the surrogate hierarchical machine-learning model is interrupted between the weighted layer block and the concept classifier.

In an embodiment, the received input records comprise corresponding concept labels.

In an embodiment, the disclosed method further comprising using a concept extractor for obtaining corresponding concept labels for the received input records.

In an embodiment, corresponding class labels are fed to the concept classifier.

In an embodiment, the disclosed method further comprising a preparation step of pretraining the first neural-network layer block and the second neural-network layer block.

In an embodiment, the machine-learning model classifier and the surrogate hierarchical machine-learning model are fed in parallel.

In an embodiment, the machine-learning model classifier and the surrogate hierarchical machine-learning model are simultaneously trained.

It is also disclosed a computer system for obtaining a surrogate hierarchical machine-learning model, trained to provide concept explanations for a machine-learning model classifier, comprising a computer processor configured for carrying out the previously described method.

It is further disclosed a computer program product embodied in a non-transitory computer-readable medium comprising computer program instructions, which when executed by a computer processor, cause the computer processor to carry out the previously described method.

## BRIEF DESCRIPTION OF THE DRAWINGS

The following figures provide preferred embodiments for illustrating the disclosure and should not be seen as limiting the scope of invention.

**Figure 1:** Schematic representation of an example of concept-based explainability paradigm for ML models in tabular domain, applied to financial crime, and healthcare use-cases.

**Figure 2:** Schematic representation of a surrogate explainer framework.

**Figure 3:** Schematic representation of a Hierarchical Multi-Task (HMT) architecture.

**Figure 4:** Schematic representation of a general Hierarchical Multi-Task architecture with an attention layer.

**Figure 5:** Schematic representation of an embodiment of a Hierarchical Multi-Task architecture with the attention input, Z, from the last shared layer.

**Figure 6:** Schematic representation of an embodiment of a Hierarchical Multi-Task architecture with the attention input, Z, from all concept embeddings.

**Figure 7:** Schematic representation of an embodiment of a Hierarchical Multi-Task architecture with the attention input, Z, from both the last shared layer and the concept embeddings.

**Figure 8:** Schematic representation of an embodiment of a Hierarchical Multi-Task architecture with the attention input, Z, from the input.

**Figure 9:** Schematic representation of an embodiment of a Hierarchical Multi-Task architecture with an attention layer and a classification ML model score input.

**Figure 10:** Schematic representation of an embodiment of a hierarchical surrogate architecture.

**Figure 11:** Schematic representation of an embodiment of NN-specific surrogate explainer.

## DETAILED DESCRIPTION

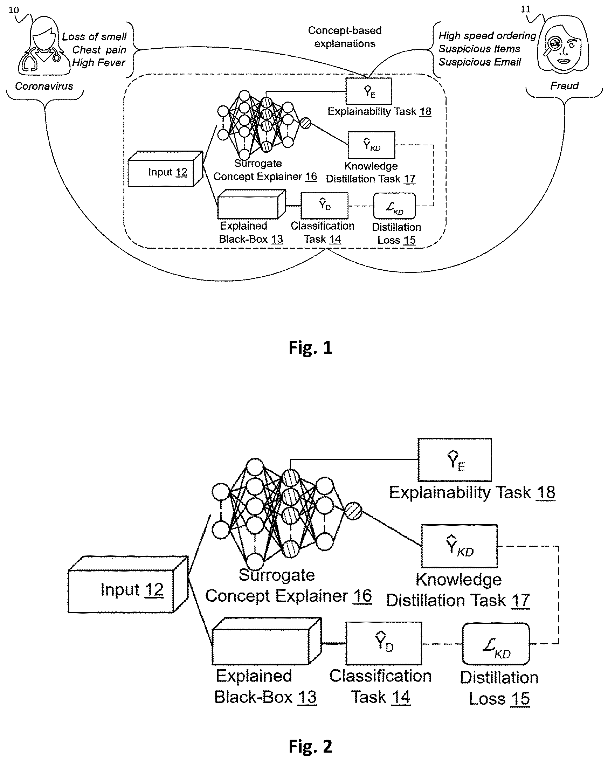

**Figure 1** shows a schematic representation of an example of concept-based explainability paradigm for ML models in tabular domain, applied to financial crime, and healthcare use-cases, where **10** represents a health professional, **11** represents a fraud analyst, **12** represents an input, **13** represents an explained black-box, **14** represents a classification task, **15** represents a distillation loss, **16** represents a surrogate concept explainer, **17** represents a knowledge distillation task, and **18** represents an explainability task.

Here, the concept-based explainability approach is deployed in real world applications, where human-in-the-loop without deep ML knowledge may avail high-level concept explanations that convey domain knowledge, enabling more valuable human-interpretable insights about complex models' predictions.

It is disclosed a concept-based knowledge distillation explainer that is able to explain a machine learning model classifier, e.g., a black-box model, by distilling its knowledge into concept-based explanations. Said explainer, i.e., a surrogate model, is framed as a hierarchical multi-task (HMT) network, where the first task predicts concepts to serve as explanations, while the second task is responsible to predict the ML model classifier output given the concepts' predictions. One of the main requirements for this present disclosure is a training set with concept annotations. Those could be obtained with a manual annotation process, which is very arduous and sometimes unfeasible, or through any weak supervision technique, producing weak concept labels.

The following pertains to preliminaries. In an embodiment, firstly D is framed as a binary classification task,

$$y_D \in \mathbb{Y}_D = \{0, 1\}$$ and a binary classification ML model $\mathcal{C} : \mathbb{X} \to \mathbb{Y}_D$ , where $C(x) = \hat{y}_D$, the random variable (x; $y_D$) has an unknown joint distribution in $X \times Y_D$, and $\hat{y}_D$ is the classifier estimate of $y_D$. The goal is to explain C by distilling its knowledge into an explainer that aligns the predictions of the classification model while, at the same time, predicts the domain concepts which serve as explanations.

It is framed an explainer, f, as a multi-task hierarchical model composed of two individual tasks: a knowledge distillation task KD, where f learns to approximate the scores given by the ML model C; and a multi-label classification task, E, where f predicts k concepts to serve as explanations. Said explainer, f, is defined as $f : \mathbb{X} \to \mathbb{Y}_E \times \mathbb{Y}_{KD}$ , where $f(x) = (\hat{y}_E, \hat{y}_{KD})$ is the (k+1)-dimensional output vector of k explanations plus the predicted knowledge distillation score. In this way, it is possible to maximize the model's performance at both tasks during training. Let $\mathcal{L}_{KD}(\hat{y}_{KD}, \mathcal{C}(x))$ and $\mathcal{L}_E(\hat{y}_E, y_E)$ represent the losses incurred by the model at the knowledge distillation and explainability tasks, respectively.

A surrogate explainer model f minimizes the weighted combination of both losses, as defined by

$$\mathcal{L}(\hat{y}, y) = \lambda \mathcal{L}_{KD}(\hat{y}_{KD}, \mathcal{C}(x)) + (1 - \lambda) \mathcal{L}_E(\hat{y}_E, y_E)$$ . Given the inherent fidelity-explainability trade-off, in an embodiment, it is included a hyperparameter $\lambda \in [0,1]$ to weight the relative importance of the knowledge distillation task with respect to the concept-producing task, or explainability task. A high $\lambda$ allows for high-fidelity between f and C at cost of the explainability task, while a low $\lambda$ allows for high explainability task performance that might be decoupled from the model being explained.

Although this joint optimization/training of both tasks is the main training strategy, other strategies are disclosed. Depending on the nature of each task, different loss functions may be used. In this work, it was opted for the Kullback-Leibler divergence loss (KLDiv) loss as $\mathcal{L}_{KD}$ and set $\mathcal{L}_E$ as the average binary cross entropy loss over the K concepts, i.e., $\mathcal{L}_E(\hat{y}_E, y_E) = \frac{1}{K} \sum_{i=0}^{K} \mathrm{CE}(\hat{y}_{E_i}, y_{E_i})$ .

Note that although the aforementioned knowledge distillation loss **15** $\mathcal{L}_{KD}$ distils the explained model through its output score, it is possible to realise this distillation through the output's logit, if available. Let the explained model's output $C(x) = \hat{y}_P = \sigma(z_C)$ and let the surrogate concept explainer **16** model's output $f(x) = \hat{y}_{KD} = \sigma(\hat{z})$, where $\sigma$ represents the sigmoid activation function and z represents the respective model's logit, it is possible to make the knowledge distillation process using both model's logits. When performing the knowledge distillation task with the model's logits, the respective loss is redefined to $\mathcal{L}_{KD}(\hat{z}, z_C)$ , where $\hat{z} \in [-\infty, +\infty]$ and $z_C \in [-\infty, +\infty]$. When using logits for the knowledge distillation task, different loss functions can be used, for example, the KLDiv loss.

**Figure 2** shows a schematic representation of the surrogate explainer framework, where **12** represents an input, **13** represents an explained black-box, **14** represents a classification task, **15** represents a distillation loss, **16** represents a surrogate concept explainer, **17** represents a knowledge distillation task, and **18** represents an explainability task.

The following pertains to surrogate architectures. There are different architectures for surrogate concept explainers **16** that can be used. All of the architectures here disclosed receive an input and try to predict the machine learning model, in this case a black-box model, given a score to that same input while trying to predict which domain concepts are present on the instance.

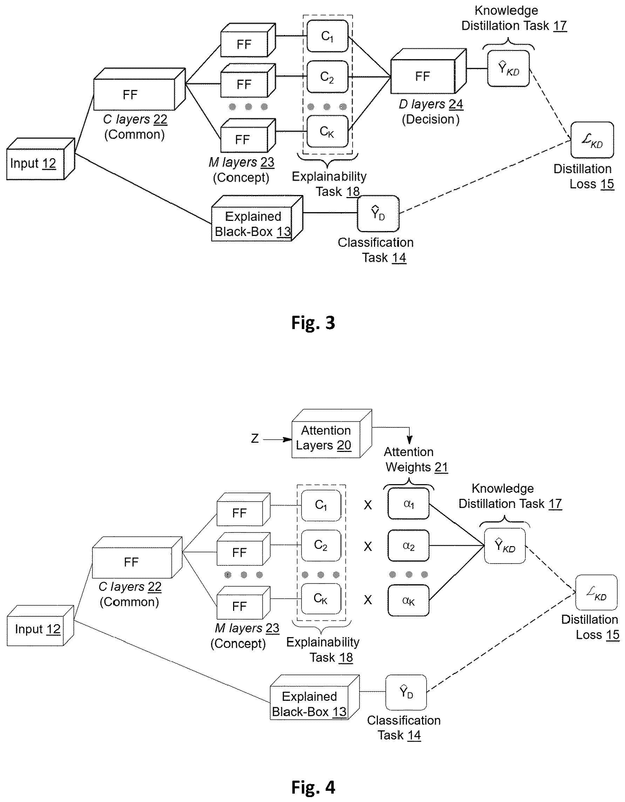

**Figure 3** shows a schematic representation of a Hierarchical Multi-Task architecture. In this embodiment, the explainer model f has a total of L layers where C of which, parameterized by $\theta_C$, are common to all tasks, M of which, parameterized by $\{\boldsymbol{\theta}_M^{(i)}\}_{i=1}^K$ represent concept-specialized layers, and D of which, parameterized by $\theta_D$, are responsible for the knowledge distillation task. Here, 12 represents an input, 13 represents an explained black-box, 14 represents a classification task, 15 represents a distillation loss, 17 represents a knowledge distillation task, 18 represents an explainability task, 22 represents common layers, 23 represents concept layers, and 24 represents decision layers.

The output of the explainability task is $\hat{\boldsymbol{y}}_E = h(h(\boldsymbol{x}; \boldsymbol{\theta}_C); \boldsymbol{\theta}_M^{(K)})$, with the prediction of the i-th concept being $\hat{\boldsymbol{y}}_E^{(i)} = h(h(\boldsymbol{x}; \boldsymbol{\theta}_C); \boldsymbol{\theta}_M^{(i)})$, where $h(x; \theta)$ represents the neurons' activation resulting from inputting x into a network parameterized by θ. The output of the knowledge distillation task is $\hat{y}_{KD} = h(\hat{y}_E; \theta_D)$. Due to this hierarchical nature where the knowledge distillation task only has explainability-task predictions as input, it is assured that a black-box's score is explained with concept predictions.

In an embodiment, if the feed-forward layers responsible for the knowledge distillation task have size one, meaning D = 1, another explanation insight is obtained using its weights $\theta_D$.

These weights can serve as a global explanation for the knowledge distillation task, while their composition with the respective concept score can serve as local explanations $\hat{y}_E \odot \theta_D$, where $\odot$ represents the point-wise multiplication operator.

**Figure 4** shows a schematic representation of a general Hierarchical Multi-Task architecture with an attention layer, where **12** represents an input, **13** represents an explained black-box, **14** represents a classification task, **15** represents a distillation loss, **17** represents a knowledge distillation task, **18** represents an explainability task, **20** represents attention layers, **21** represents attention weights, **22** represents common layers, and **23** represents concept layers. This architecture, noted here on as AttentionHMT, is akin to an HMT with a 1-layer knowledge distillation component with a main difference: in the AttentionHMT, the coefficients of each concept prediction are given by an attention.

This architecture allows for more flexibility and predictive power, thus replacing the linear knowledge distillation component for an attention mechanism.

Considering the explainability task, AttentionHMT does not differ from the above described HTM, Hierarchical Multi-Task. The KD task output, however, is now defined as $\hat{\boldsymbol{y}}_{KD} = \sum_{i=0}^K \hat{\boldsymbol{y}}_E^{(i)} \times \alpha_i$, where $\boldsymbol{y}_E^{(i)}$ represents the prediction for the i-th concept, and $\alpha_i$ represents the i-th attention coefficient. In this architecture, no activation function is required to produce an output as it is needed to guarantee that $\hat{y}_{KD} \in [0,1]$ due to $\hat{\boldsymbol{y}}_E^{(i)} \in [0, 1]$ and $\sum_{i=0}^K \alpha_i = 1$.

In an embodiment, for the same architecture, the attention is given over the concept logits instead of the concept predictions. Consider $\boldsymbol{y}_E^{(i)} = \sigma(\hat{\boldsymbol{z}}^i)$, where σ represents the sigmoid activation function and $z^i \in [-\infty, +\infty]$ the i-th logit, the output of the network will then be $\hat{\boldsymbol{y}}_{KD} = \sigma\left(\sum_{i=0}^K z^i \times \alpha_i\right)$. This approach allows for concepts to have an uncapped and negative impact on the score, as the logits are not constrained by the sigmoid to [0; 1].

In both the previous embodiments, the attention coefficients are given by an Bahdanau-styled [2] attention layer, parameterized by $\theta_{att}$ and defined as:

$$\alpha_i = softmax(e_i, e), \tag{1}$$

$$e = AttentionBlock(Z), \tag{2}$$

where Z represents the input to the AttentionBlock layer block, which is a feedforward network with input Z and outputs K weights α.

In an embodiment, the AttentionBlock can be a feedforward block of an arbitrary number of layers.

When considering the AttentionHMT architecture, different embodiments can be obtained by varying the information inputted to the attention layer block. As such, it is disclosed three different architectures named as CommonAttentionHMT, SelfAttentionHMT, MixedAttentionHMT, where the only difference between them is the attention input Z. Note that independent of the input, the attention layer always outputs K weights corresponding to the K predicted concepts.

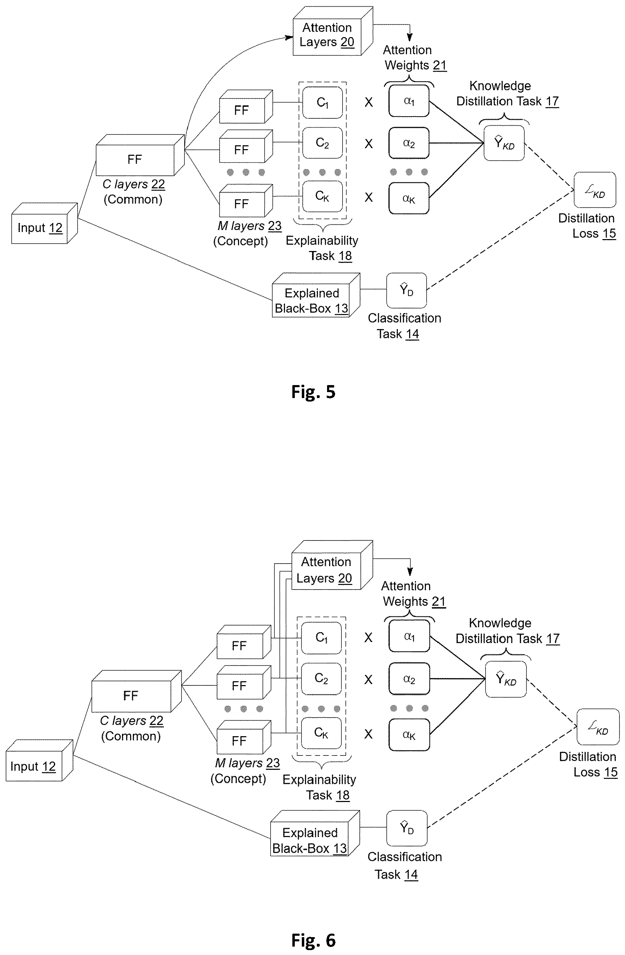

**Figure 5** shows a schematic representation of an embodiment of a Hierarchical Multi-Task architecture with the attention input, **Z**, from the last shared layer, here named as CommonAttentionHMT, where **12** represents an input, **13** represents an explained black-box, **14** represents a classification task, **15** represents a distillation loss, **17** represents a knowledge distillation task, **18** represents an explainability task, **20** represents attention layers, **21** represents attention weights, **22** represents common layers, and **23** represents concept layers.

In an embodiment, the attention layer inputs the network embedding produced by the last shared layer, Z = h(x; $\theta_C$), hereby defined as CommonAttentionHMT.

**Figure 6** shows a schematic representation of an embodiment of a Hierarchical Multi-Task architecture with the attention input, **Z**, from all concept embeddings, here named as SelfAttentionHTM, where **12** represents an input, **13** represents an explained black-box, **14** represents a classification task, **15** represents a distillation loss, **17** represents a knowledge distillation task, **18** represents an explainability task, **20** represents attention layers, **21** represents attention weights, **22** represents common layers, and **23** represents concept layers.

In an embodiment, the attention layer inputs the concatenation of all concept embeddings, Z = (embi; emb$_2$; ...;

emb$_k$), where $emb_i = h(h(\boldsymbol{x}; \boldsymbol{\theta}_C); \boldsymbol{\theta}_M^{(i)})$ . In this architecture, a concept embedding *emb$_i$* is the embedding of the i-th concept given by the M -1 concept specific layer, hereby defined as SelfAttentionHMT.

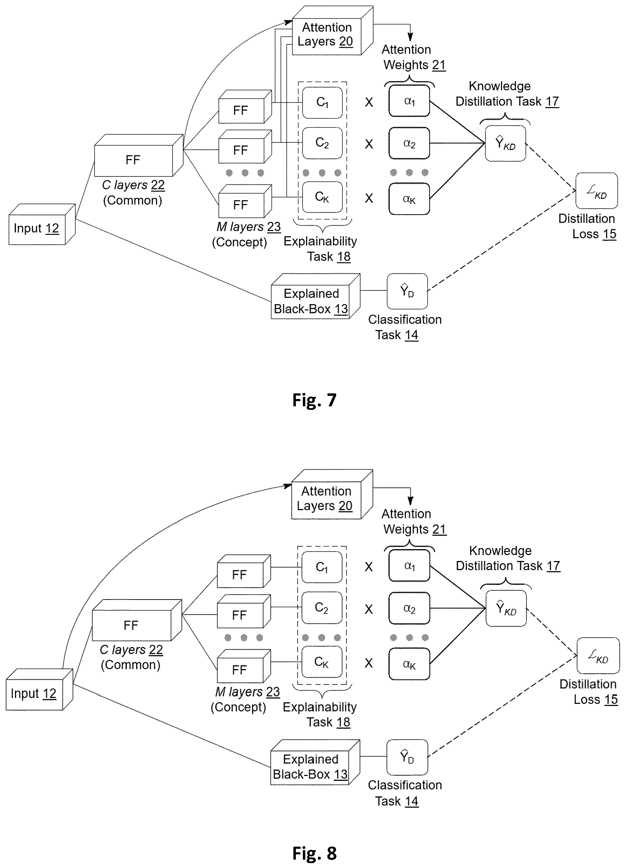

**Figure 7** shows a schematic representation of an embodiment of a Hierarchical Multi-Task architecture with the attention input, **Z**, from both the last shared layer and the concept embeddings, here named as MixedAttentionHMT, where **12** represents an input, **13** represents an explained black-box, **14** represents a classification task, **15** represents a distillation loss, **17** represents a knowledge distillation task, **18** represents an explainability task, **20** represents attention layers, **21** represents attention weights, **22** represents common layers, and **23** represents concept layers.

In an embodiment, the attention layer inputs both the information defined on the CommonAttentionHMT and the SelfAttentionHMT embodiments. In this architecture Z is defined as Z = (h(x; $\theta_C$); emb$_1$; emb$_2$; ...; emb$_k$).

In all of the aforementioned embodiments it is possible to add the concept predictions, $\hat{y}_E$, to the embedding input of the attention layer. This addition allows the attention layer to have as input the vector that it will affect. As such, the input embedding for the CommonAttentionHMT architecture is defined as Z = (h(x; $\theta_C$), $\hat{y}_E$), for the SelfAttentionHMT architecture as Z = (emb$_1$; emb$_2$; ...; emb$_K$; $\hat{y}_E$), and for the MixedAttentionHMT architecture as Z = (h(x; $\theta_C$); emb$_1$; emb$_2$; ...; emb$_K$; $\hat{y}_E$).

In the aforementioned embodiments, high-level concepts were encoded into an explainability layer, forcing the decision/knowledge distillation layer to use these concept predictions as inputs.

Through this encoding, explanation fidelity is guaranteed as well as feature importance's scores for the knowledge distillation task where the features are concept predictions.

**Figure 8** shows a schematic representation of an embodiment of a Hierarchical Multi-Task architecture with the attention input, **Z**, from the input, where **12** represents an input, **13** represents an explained black-box, **14** represents a classification task, **15** represents a distillation loss, **17** represents a knowledge distillation task, **18** represents an explainability task, **20** represents attention layers, **21** represents attention weights, **22** represents common layers, and **23** represents concept layers.

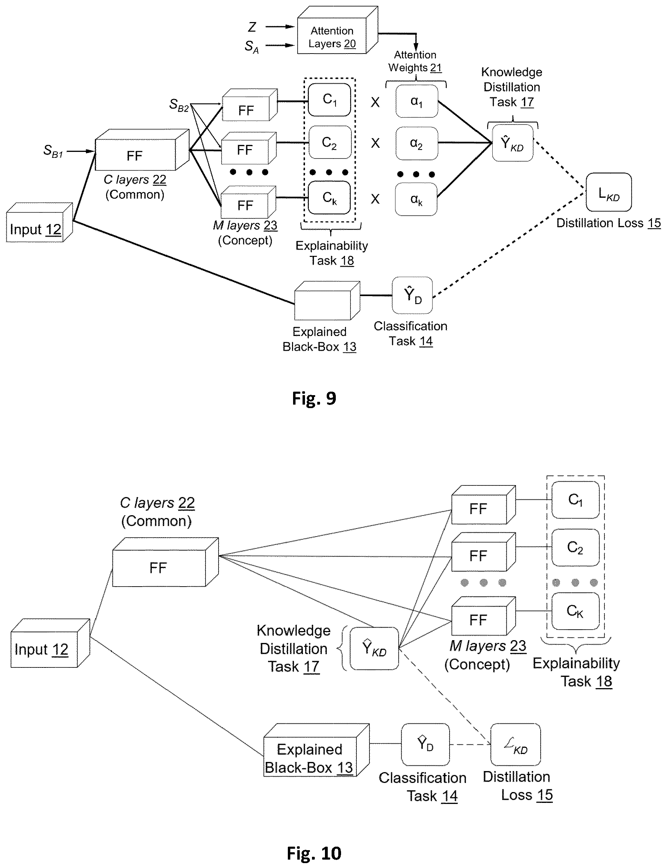

**Figure 9** shows a schematic representation of an embodiment of a Hierarchical Multi-Task architecture with an attention layer and a classification ML model score as an input, where **12** represents an input, **13** represents an explained black-box, **14** represents a classification task, **15** represents a distillation loss, **17** represents a knowledge distillation task, **18** represents an explainability task, **20** represents attention layers, **21** represents attention weights, **22** represents common layers, and **23** represents concept layers. This figure comprises several embodiments, of the proposed approach, for feeding a classification machine learning model score to the surrogate model.

In an embodiment, the classification machine learning model score, S$_A$, inputs directly to the Attention Layers **20**, together with input Z. This allows the Attention Layers **20** to learn the weights conditioned on a classification machine learning model score, e.g., what is the most relevant concept given a black-box model score is higher than 0.69.

In another embodiment, the classification machine learning model score, S$_{B1}$, inputs the common Layers **22**, or directly for each of the M Concept Layers **23**, denoted by S$_{B2}$. This allows the concepts' layers to be conditioned on the fraud, specializing its knowledge given the classification machine learning model score.

In another embodiment, the classification machine learning model score, S$_A$, inputs directly to the Attention Layers **20**, together with an input the common Layers **22**, S$_{B1}$, or directly for each of the M Concept Layers **23**, S$_{B2}$.

Because the goal of the surrogate model is to both approximate the classification machine learning model score, e.g., a black-box model score, while learning the concepts present in the inputs, it is possible to additionally include the classification machine learning model score as the input for the surrogate model.

The explainability task can be improved by knowing beforehand the likelihood of the input belonging to a given class. This information can be obtained using the classification machine learning model. Thus, this approach can potentially improve the performance of the distillation task.

One important aspect to take into account is the possibility of having a leakage effect where the surrogate model learns to approximate the classification score using the classification score itself. This does not necessarily consist of a problem because the surrogate model has explainability as its main task which consists of also predicting the concepts while doing distillation. One possibility is that such approach could maybe result in a trade-off that would benefit the distillation task too much while hindering the explainability task. To circumvent this while still improving the distillation task, it is proposed one variant in which the classification machine learning model score is fed solely to the Attention Layers. In this approach, the score from the classification machine learning model only helps to compute better dynamic attention weights to combine the prediction scores of the different concepts.

**Figure 10** shows a schematic representation of an embodiment of a hierarchical surrogate architecture, where the main task is predicted first, and its decision is inputted to the explainability one, thus a allowing for more flexibility where 12 represents an input, 13 represents an explained black-box, 14 represents a classification task, 15 represents a distillation loss, 17 represents a knowledge distillation task, 18 represents an explainability task, 22 represents common layers, and 23 represents concept layers.

This architecture, dubbed here on as ReversedHMT, is composed of C + 1 + M layers, C of which, parameterized by $\theta_C$, being common to both tasks, 1 of which, parameterized by $\theta_{KD}$, responsible for the knowledge distillation task, and finally, M of which, parameterized by $\{\boldsymbol{\theta}_M^{(i)}\}_{i=1}^{K}$, represent concept-specialized layers.

This architecture is hierarchical as the tasks are still sequential, but in this case the main classification task is predicted first, and its output is used on the explainability one. The output of this architecture is then a (k + 1)-dimensional output vector of k explanations plus the predicted knowledge distillation score defined as $f(x)) = (\hat{y}_E, \hat{y}_{KD})$. The knowledge distillation output $\hat{y}_{KD}$ is defined as $\hat{y}_{KD} = h(h(x, \theta_C), \theta_{KD})$, while the explainability task output is the common architecture with the main task decision score concatenated, defined as $\hat{\boldsymbol{y}}_E^{(i)} = h\big((h(\boldsymbol{x};\boldsymbol{\theta}_C),\hat{\boldsymbol{y}}_{KD}),\boldsymbol{\theta}_M^{(i)}\big)$ where i represents the i-th concept.

$$\hat{\boldsymbol{y}}_E^{(i)} = h\big((h(\boldsymbol{x};\boldsymbol{\theta}_C),\hat{\boldsymbol{y}}_{KD}),\boldsymbol{\theta}_M^{(i)}\big)$$

The following pertains to Neural Network Specific. The present disclosure went over the framework to explain a machine-learning model using a surrogate concept based explainer. It is presented a variation of the present approach to explain deep learning algorithms specifically.

Let the binary classifier being explained $\mathcal{C} : \mathbb{X} \to \mathbb{Y}_P$, be a deep learning model with N layers 24, one can modify the disclosed explainer to only distil the last W layers 25 of the explained classifier 30 model, and therefore, achieve a higher explanation fidelity, as the explainer will focus on distilling the classifier's last layers responsible for obtaining a prediction. The explainer is defined as $f : Z \to \mathbb{Y}_E \times \mathbb{Y}_{KD}$, where $Z = h(\mathbb{X}, \theta_{N-W})$ is the neuron activation output space of the first N - W layers of the explained classifier C. The output of the explainer is then a (k + 1)-dimensional output vector $f(h(x, \theta_{N-W})) = (\hat{y}_E, \hat{y}_{KD})$ of k explanations plus the predicted knowledge distillation score.

The main difference between this NN-specific implementation is the fact that the explainer has as input an embedding produced at the N - W layer, instead of the raw input. This change allows for the explanation to be more aligned with the explained model as the explainer needs to extract the domain concepts from an embedding used by the classifier, instead of learning how to extract concepts from the raw input.

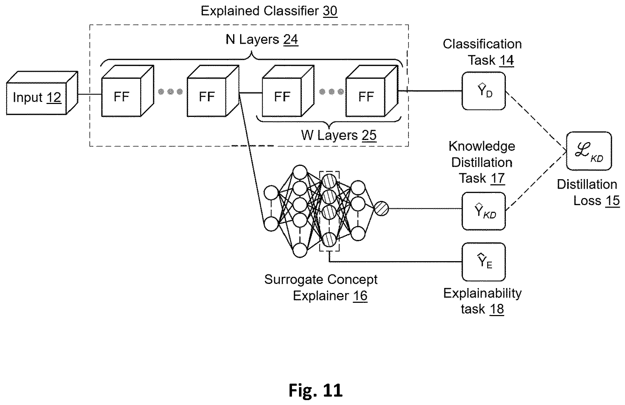

**Figure 11** shows a schematic representation of an embodiment of NN-specific surrogate explainer, where 12 represents an input, 14 represents a classification task, 15 represents a distillation loss, 16 represents a surrogate concept explainer, 17 represents a knowledge distillation task, 18 represents an explainability task, 24 represent a deep learning model with N layers, 25 represents the last W layers the explained classifier model, and 30 represents an explained classifier.

The following pertains to Training Strategies. The present disclosure goes over the several proposed learning strategies to train the aforementioned proposed architectures. The main training strategy that it is proposed to train the mentioned architectures is one where both the main task and the explainability task are learned jointly at the same time. In addition to this strategy, it is proposed a sequential learning strategy, where the first task is learnt alone, and only after is the second task added to the training. Note that when the second task is added, the pre-trained parameters can either continue to train or be frozen.

Considering the architectures where the explainability task comes first, (all of proposed architectures except ReversedHMT), the sequential learning strategy is equivalent to training an only-concepts network, where the training loss function is defined only as the explainability task loss, $\mathcal{L} = \mathcal{L}_E$.

After the first step of training has finished, there are two options: (1) freeze the previously learnt parameters, only learning the parameters regarding the knowledge distillation task only, or (2) continue learning the whole network jointly. In the first case, because the previously learnt weights are not going to be trained, the architecture loss function is defined as just the knowledge distillation task, $\mathcal{L} = \mathcal{L}_{KD}$. In the second case, the training is analogous to the standard join training, where all parameters are updated, $\mathcal{L} = \lambda \mathcal{L}_{KD} + (1 - \lambda) \mathcal{L}_E$. Regarding the ReversedHMT architecture, the same learning strategies stand, but the tasks are reversed, meaning, that the first task to be learnt is the knowledge distillation one $\mathcal{L}_{KD}$, and the second task is the explainability one $\mathcal{L}_E$.

In this work, it is proposed to use a concept-based knowledge distillation method that can be applied to any ML model, including black-box models. Along with the knowledge distillation task, it is defined an explainability task that allows a surrogate model to produce high-level concept explanations. This surrogate model is framed as a hierarchical multi-task model that predicts concepts, domain knowledge explanations, and the ML model original task's output at the same time. Furthermore, it is also proposed a more specialized approach to explain neural networks that uses an intermediate embedding from the original model as the input for surrogate, instead of raw input vector.

The term "comprising" whenever used in this document is intended to indicate the presence of stated features, integers, steps, components, but not to preclude the presence or addition of one or more other features, integers, steps, components, or groups thereof.

The disclosure should not be seen in any way restricted to the embodiments described and a person with ordinary skill in the art will foresee many possibilities to modifications thereof. The above-described embodiments are combinable.

The following claims further set out particular embodiments of the disclosure.

References

[1] Jimmy Ba and Rich Caruana. Do deep nets really need to be deep? In Z. Ghahramani, M. Welling, C. Cortes, N. D. Lawrence, and K. Q. Weinberger, editors, Advances in Neural Information Processing Systems 27, pages 2654-2662. Curran Associates, Inc., 2014.

[2] Dzmitry Bahdanau, Kyunghyun Cho, and Yoshua Bengio. Neural machine translation by jointly learning to align and translate. arXiv preprint arXiv:1409.0473, 2014.

[3] Vladimir Balayan, Pedro Saleiro, Catarina Belem, Ludwig Krippahl, and Pedro Bizarro. Teaching the machine to explain itself using domain knowledge. arXiv preprint arXiv:2012.01932, 2020.

[4] Cristian Bucil and Rich Caruana. Model Compression. 2006.

[5] Amirata Ghorbani, James Wexler, James Y Zou, and Been Kim. Towards automatic conceptbased explanations. In Advances in Neural Information Processing Systems, pages 9277-9286, 2019.

[6] Been Kim, Martin Wattenberg, Justin Gilmer, Carrie Cai, James Wexler, Fernanda Viegas, et al. Interpretability beyond feature attribution: Quantitative testing with concept activation vectors (tcav). In International conference on machine learning, pages 2668-2677. PMLR, 2018.

[7] Pang Wei Koh, Thao Nguyen, Yew Siang Tang, Stephen Mussmann, Emma Pierson, Been Kim, and Percy Liang. Concept bottleneck models. In Hal Daume III and Aarti Singh, editors, Proceedings of the 37th International Conference on Machine Learning, volume 119 of Proceedings of Machine Learning Research, pages 5338-5348. PMLR, 13-18 Jul 2020.

[8] Oscar Li, Hao Liu, Chaofan Chen, and Cynthia Rudin. Deep learning for case-based reasoning through prototypes: A neural network that explains its predictions. In Proceedings of the AAAI Conference on Artificial Intelligence, volume 32, 2018.

[9] Timothy P. Lillicrap and Konrad P. Körding. What does it mean to understand a neural network? CoRR, abs/1907.06374, 2019.

[10] Scott M. Lundberg and Su In Lee. A unified approach to interpreting model predictions. Advances in Neural Information Processing Systems, 2017-Decem (Section 2):4766-4775, 2017.

[11] David Alvarez Melis and Tommi Jaakkola. Towards robust interpretability with self-explaining neural networks. In Advances in Neural Information Processing Systems, pages 7775-7784, 2018.

[12] Vedant Nanda, Till Speicher, John P. Dickerson, Krishna P. Gummadi, and Muhammad Bilal Zafar. Unifying model explainability and robustness via machinecheckable concepts, 2020.

[13] Dheeraj Rajagopal, Vidhisha Balachandran, Eduard Hovy, and Yulia Tsvetkov. Selfexplain: A self-explaining architecture for neural text classifiers. arXiv preprint arXiv:2103.12279, 2021.

[14] Marco Tulio Ribeiro, Sameer Singh, and Carlos Guestrin. "Why should I trust you?" Explaining the predictions of any classifier. Proceedings of the ACM SIGKDD International Conference on Knowledge Discovery and Data Mining, 13-17-August-2016:1135-1144, 2016.

[15] Ozan Sener and Vladlen Koltun. Multi-task learning as multi-objective optimization. Advances in neural information processing systems, 31, 2018.

**Claims**

1. Computer-implemented method for obtaining a surrogate hierarchical machine-learning model, trained to provide concept explanations for a machine-learning model classifier,

   wherein the machine-learning model classifier is a pre-existing machine-learning model arranged to receive and determine a classification estimate of input records into output records, each output record containing a determined class corresponding to a respective input record,
   wherein the surrogate hierarchical machine-learning model is a machine-learning model arranged to receive input records, to determine a classification estimate of input records into output records, each output record containing a determined class corresponding to a respective input record and corresponding concept labels,
   wherein the surrogate hierarchical machine-learning model is a hierarchical multi-task network which comprises, sequentially connected, a first neural-network layer block for receiving input records, a second neural-network layer block split by concept, a concept classifier for each of the concept labels, and a weighted layer block for providing a determined class estimate corresponding to a respective input record,
   the method comprising the steps of:

   obtaining input records and corresponding concept labels for each input record;
   feeding the obtained input records to the machine-learning model classifier;
   feeding the obtained input records to the surrogate hierarchical machine-learning model;
   comparing the determined class estimate from the output records of the surrogate hierarchical machine-learning model with the determined class estimate contained in the output records of the machine-learning model classifier to calculate a distillation loss;
   backpropagating a calculated gradient of the distillation loss to update weights of the surrogate hierarchical machine-learning model.

2. Computer-implemented method according to the previous claim, wherein the surrogate hierarchical machine-learning model comprises an attention neural-network layer block feeding the weighted layer block.

3. Computer-implemented method according to the previous claim, wherein the attention neural-network layer block is fed from the first neural-network layer block, or is fed from the second neural-network layer block, or is fed from the input records, or combinations thereof.

4. Computer-implemented method according to claim 2 or 3, wherein the attention neural-network layer block is fed from the determined class estimate from the output records of the machine-learning model classifier.

5. Computer-implemented method according to any of the previous claims, wherein, the first neural-network layer block for receiving input records or the second neural-network layer block is fed from the determined class estimate from the output records of the machine-learning model classifier.

6. Computer-implemented method according to any of the previous claims, wherein the backpropagating of the calculated gradient of the distillation loss to update weights of the surrogate hierarchical machine-learning model is interrupted between the weighted layer block and the concept classifier.

7. Computer-implemented method according to any of the previous claims, wherein the received input records comprise corresponding concept labels.

8. Computer-implemented method according to any of the claims 1-6, comprising using a concept extractor for obtaining corresponding concept labels for the received input records.

9. Computer-implemented method according to the any of the previous claims, wherein corresponding class labels are fed to the concept classifier.

10. Computer-implemented method according to the previous claim, comprising a preparation step of pretraining the first neural-network layer block and the second neural-network layer block.

11. Computer-implemented method according to any of the previous claims, wherein the machine-learning model classifier and the surrogate hierarchical machine-learning model are fed in parallel.

12. Computer-implemented method according to the previous claim, wherein the machine-learning model classifier and the surrogate hierarchical machine-learning model are simultaneously trained.

13. Computer system for obtaining a surrogate hierarchical machine-learning model, trained to provide concept explanations for a machine-learning model classifier, comprising a computer processor configured for carrying out the method according to any of the previous claims.

14. Computer program product embodied in a non-transitory computer-readable medium comprising computer program instructions, which when executed by a computer processor, cause the computer processor to carry out the method of any of the claims 1-12.

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

Explained Classifier 30

N Layers 24

Input 12

FF ••• FF FF ••• FF

W Layers 25

Classification
Task 14

$\hat{Y}_D$

Knowledge
Distillation
Task 17

$\mathscr{L}_{KD}$

Distillation
Loss 15

$\hat{Y}_{KD}$

Surrogate Concept
Explainer 16

$\hat{Y}_E$

Explainability
task 18

**Fig. 11**

Europäisches
Patentamt
European
Patent Office
Office européen
des brevets

# EUROPEAN SEARCH REPORT

Application Number

EP 22 18 0841

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LEE HYEONSEOK ET AL: "Explaining Neural Networks Using Attentive Knowledge Distillation", SENSORS, vol. 21, no. 4, 11 February 2021 (2021-02-11), page 1280, XP093001749, DOI: 10.3390/s21041280 * abstract; figures 2, 4 * * section 3.1, lines 1-7 * * section 3.1, lines 27-32 * * section 3.1, lines 45-47 * * section 3.2, lines 9-18 * * section 3.3, lines 1-2 * * section 4.1, lines 17-20 * * section 4.1, lines 30-31 * * equation (2), (6), (7) * ----- | 1-14 | INV. G06N5/04 G06N3/04 G06N3/08 |
| A | CATARINA BEL\'EM ET AL: "Weakly Supervised Multi-task Learning for Concept-based Explainability", ARXIV.ORG, CORNELL UNIVERSITY LIBRARY, 201 OLIN LIBRARY CORNELL UNIVERSITY ITHACA, NY 14853, 26 April 2021 (2021-04-26), XP081943980, * figure 2 * ----- | 1-14 | |
| A,D | AMIRATA GHORBANIJAMES WEXLERJAMES Y ZOUBEEN KIM: "Towards automatic conceptbased explanations", IN ADVANCES IN NEURAL INFORMATION PROCESSING SYSTEMS, 2019, pages 9277-9286, XP002808202, * the whole document * ----- | 1-14 | |

TECHNICAL FIELDS
SEARCHED (IPC)

G06N

The present search report has been drawn up for all claims

| Place of search | Date of completion of the search | Examiner |
|---|---|---|
| The Hague | 8 December 2022 | Aoun, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................................

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2148502 W

### Non-patent literature cited in the description

- Do deep nets really need to be deep?. **JIMMY BA ; RICH CARUANA.** Advances in Neural Information Processing Systems. Curran Associates, Inc, 2014, vol. 27, 2654-2662
- **DZMITRY BAHDANAU ; KYUNGHYUN CHO ; YOSHUA BENGIO.** Neural machine translation by jointly learning to align and translate. *arXiv:1409.0473,* 2014
- **VLADIMIR BALAYAN ; PEDRO SALEIRO ; CATARINA BELEM ; LUDWIG KRIPPAHL ; PEDRO BIZARRO.** Teaching the machine to explain itself using domain knowledge. *arXiv:2012.01932,* 2020
- **CRISTIAN BUCIL ; RICH CARUANA.** *Model Compression,* 2006
- **AMIRATA GHORBANI ; JAMES WEXLER ; JAMES Y ZOU ; BEEN KIM.** Towards automatic conceptbased explanations. *Advances in Neural Information Processing Systems,* 2019, 9277-9286
- Interpretability beyond feature attribution: Quantitative testing with concept activation vectors (tcav). **BEEN KIM ; MARTIN WATTENBERG ; JUSTIN GILMER ; CARRIE CAI ; JAMES WEXLER ; FERNANDA VIEGAS et al.** International conference on machine learning. PMLR, 2018, 2668-2677
- Concept bottleneck models. **PANG WEI KOH ; THAO NGUYEN ; YEW SIANG TANG ; STEPHEN MUSSMANN ; EMMA PIERSON ; BEEN KIM ; PERCY LIANG.** Proceedings of the 37th International Conference on Machine Learning. PMLR, 13 July 2020, vol. 119, 5338-5348
- **OSCAR LI ; HAO LIU ; CHAOFAN CHEN ; CYNTHIA RUDIN.** Deep learning for case-based reasoning through prototypes: A neural network that explains its predictions. *Proceedings of the AAAI Conference on Artificial Intelligence,* 2018, vol. 32
- **TIMOTHY P. LILLICRAP ; KONRAD P. KÖRDING.** What does it mean to understand a neural network?. *CoRR,* 2019
- **SCOTT M. LUNDBERG ; SU IN LEE.** A unified approach to interpreting model predictions. *Advances in Neural Information Processing Systems,* December 2017, 4766-4775
- **DAVID ALVAREZ MELIS ; TOMMI JAAKKOLA.** Towards robust interpretability with self-explaining neural networks. *Advances in Neural Information Processing Systems,* 2018, 7775-7784
- **VEDANT NANDA ; TILL SPEICHER ; JOHN P. DICKERSON ; KRISHNA P. GUMMADI ; MUHAMMAD BILAL ZAFAR.** *Unifying model explainability and robustness via machinecheckable concepts,* 2020
- **DHEERAJ RAJAGOPAL ; VIDHISHA BALACHANDRAN ; EDUARD HOVY ; YULIA TSVETKOV.** Selfexplain: A self-explaining architecture for neural text classifiers. *arXiv:2103.12279,* 2021
- **MARCO TULIO RIBEIRO ; SAMEER SINGH ; CARLOS GUESTRIN.** Why should I trust you?. *Explaining the predictions of any classifier. Proceedings of the ACM SIGKDD International Conference on Knowledge Discovery and Data Mining,* 1135-1144
- **OZAN SENER ; VLADLEN KOLTUN.** Multi-task learning as multi-objective optimization. *Advances in neural information processing systems,* 2018, 31